# EUROPEAN PATENT APPLICATION

(11) **EP 3 121 571 A1**
(43) Date of publication of application: **25.01.2017**
(21) Application number: 15002175.6
(22) Date of filing: 22.07.2015
(51) Int. Cl.: G01J 3/02, G01J 3/52

(54) **COLOR SAMPLE DEVICE FOR PROVIDING COLOR INFORMATION, METHOD FOR ITS PRODUCTION AND DATA PROCESSING APPARATUS FOR READING THE COLOR INFORMATION**

(71) Applicant: Archroma IP GmbH, 4153 Reinach (CH)
(72) Inventor: Mc CLANAHAN, Brad, Charlotte, NC 28205 (US); HIPPS, Chris, Charlotte, NC 28205 (US)
(74) Representative: Ricker, Mathias

(57) **Abstract**

The invention relates to color sample device for showing color information of a color sample, having a substrate element for carrying the color sample, the color sample having at least one display surface, which displays the color of the color sample, and which is connected and arranged at the substrate element, a data storage device, which contains color information data, which is machine-readable and which is configured for a wireless reading of the color information data from the data storage device by the data processing apparatus according to the invention. The invention also relates to a method of production and the data processing apparatus.

## Description

The present invention is related to a color sample device for providing color information, the method for its production and a data processing apparatus for reading the color information from the color sample device.

Current color sample devices are used in the dye industry to present visual information on the dyes. Typically, a color sample device is formed as a card, which shows the color on a surface usually in combination with written information for identifying the color. Color sample devices can also be formed as color reference charts or color selection charts, which present more than one color, or even the multiple colors of a known color system like DIC Color Guide, NCS Palette, Pantone or RAL. Such color systems present known standard colors, which are distinctively defined.

Todays, dyes are produced for customers, who not only use known standard colors but who more and more request highly customized color standards. Color is a critical differentiator at retail and brands and allows for individualization and awareness. Colored products often require special attention to matching in different light sources and coordinating the same color on different fabrics and blends. The correct representation of custom colors is important for executing the production of custom colored products on multiple continents within a short time frame. Also in the case of colors contained in existing color libraries and colors of existing color standards a correct and efficient representation of color information is desired. Moreover, the color information required in many fields of industrial production may be complex. For example, in the textile industry, color recipes may be different for the various substrates, e.g. polyester, nylon, cotton, etc. It was found by the inventors that the efficient representation of such complex color information on a color sample device would significantly increase the workflow in many production scenarios. Therefore, it must be possible to provide color sample devices, which reliably and comprehensively present information on custom colors, library colors and standard colors. Furthermore, the manufacture cost of a color sample device should be low.

It is the object of the present invention to provide a color sample device, a data processing apparatus suitable to be used to read from the color sample device, and a method for production, which are efficient to use and cost-efficient.

The invention solves the object by the color sample device of claim 1, the data processing apparatus of claim 7 and the method of production of claim 11. Preferred embodiments of the invention are subject matter of the dependent claims and are described in particular in the following.
The color sample device according to the present invention serves for showing color information of a color sample and has a substrate element for carrying the color sample, the color sample having at least one display surface, which displays the color of the color sample, and which is connected and arranged at the substrate element, a data storage device, which contains color information data, which is machine-readable and which is configured for a wireless reading of the color information data from the data storage device, wherein the data storage device is arranged at the substrate element.

The color sample device being equipped with the data storage device offers the advantage that the color information can be evaluated not only visually by a user but also by machine. Therefore, the acquisition of the color information can be reliably performed using an appropriate separate data processing apparatus. The separate data processing apparatus is also referred to be the data processing apparatus. The data processing apparatus is configured to read the color information data from the data storage device.

Moreover, the color sample device being equipped with the data storage device can be cost-efficiently manufactured because the data storage device is not required to have a microprocessor or other sub-devices, which would require a power source.

Preferably, the data storage device is configured such that the process of reading the color information data from the data storage device does not require a power source as a part of the color sample device or as a part of the data storage device. A color sample device, which does not require a power source as a part of the color sample device, is also named a "passive device". Preferably, the color sample device does not contain a power source, e.g. a battery, or an energy converter, e.g. a solar cell.

The color sample device can have a substantially plain shape and can be a card device. The color sample device may be deformable, or respectively, flexible.

The substrate element can have a substantially plain shape and can be a card element. The substrate element may be flexible. The substrate element can be any item suitable to serve as a base for carrying the color sample and the data storage device. The substrate element can be made from paper and/or cardboard and/or plastic and/or metal, or may consist of any solid material. The substrate element may be laminated by one or more plastic foils, which can be transparent. It is also possible and preferred that the data storage device is laminated by a plastic foil, preferably laminated to the substrate element. The plastic foil offers protection against abrasion and corrosion.

The substrate element can have at least one opening and/or at least one recess. Such an opening or recess can be used to -partly or completely- receive or contain another part of the color sample device, for example the data storage device. This offers a more compact shape and protects the part. Moreover, using a reduced amount of material offers cost and weight reduction.

In case that an improved mechanical stability of the color sample device is desired, the substrate element may also comprise, or consist of a polymer, preferably a thermoplast, and/or a metal, e.g. aluminum.

The substrate element, preferably, offers a substrate plane, which may be used to support the color sample. Preferably, the size of the substrate plane is equal to or larger than the size of the color sample.

The substrate element may be a folding card having at least two card elements, wherein the color sample and/or the data storage device are preferably arranged between the card elements, when the folding card is closed. Such a configuration protects the color sample and/or the data storage device against the environment, e.g. against light, abrasion, humidity.

The substrate element can also have a substantially non-planar shape, e.g. a bar-like shape or can be a cuboid or another body having a rather three-dimensional shape. Moreover, the substrate element can also be incorporated by the color sample or the data storage device. For example, a planar color sample may serve as a substrate element, which has the display surface and which also carries the data storage device. The color sample can be a colored article, which is preferably planar, wherein said article can be a cardboard, plastic or textile, for example. A swatch is a textile sample taken from a larger textile material. The color sample preferably is a swatch, and the color sample device can then be a color swatch device. The color sample preferably is a physical representation of a dyed article, preferably a physical color swatch, which in particular serves as a visual reference standard for representing the color. Said color, preferably, is a custom color, which is not contained in the group of standard color systems including DIC Color Guide, NCS Palette, Pantone or RAL, or preferably, is a color contained in such a standard color system or any other predetermined and known custom or commercial color library.

The data storage device, preferably, is connected to the substrate element by an adhesive connection and/or force-fit connection and/or positive-fit connection. It may also be connected to the substrate element using at least one connection element, e.g. a lamination foil, a pin, a hinge member, a clamp etc. Preferably, the data storage device is connected to the color sample device, or the substrate element, by being laminated to the same, in particular using a lamination foil, which may be transparent, or nontransparent. The data storage device may be also incorporated into the color sample device, or the substrate element, or the color sample, in particular into an opening or recess.

The data storage device may be a section of the color sample device, in particular a section of the substrate, which carries a machine-readable information. Such a machine-readable information is not suitable to be read by humans but is configured to be read by machine. A printed text or numbers and signs of any human language and/or any human writing system are, respectively, not understood to be a machine-readable information in terms of the present patent application.

The machine-readable information may be an optically readable and/or electronically readable information. The machine-readable information may be a barcode, which may be printed on the color sample device, in particular a section of the substrate, or on any element connected to the color sample device, e.g. a label or sticker. A barcode is an optical machine-readable representation of data relating to the object to which it is attached. A barcode may be represented by varying the widths and spacings of parallel lines, which is a 1-dimensional barcode.

A barcode may also be a 2-dimensional barcode, in particular a data matrix, represented by rectangles, dots, hexagons and other geometric patterns in two dimensions. Barcodes are capable to be scanned by optical scanners, i.e. barcode readers. Data Matrix code is a two-dimensional matrix barcode consisting of black and white "cells" or modules arranged in either a square or rectangular pattern. The information to be encoded can be text or numeric data.

Color information may be directly encoded in the machine-readable information or a referrer may be encoded in the machine-readable information, which refers the reading apparatus, in particular the data processing apparatus according to the invention. Such a referrer may be a code linking to an URL or a referrer which causes the data processing apparatus to launch a local software application.

The data storage device can be read by machine, without requiring a wired connection. Preferably, the data storage device can be read by a wireless connection. The process of reading the data from the data storage device is also referred to as data extraction. Preferably, the data storage device is at least configured for data extraction, wherein the direction of data transfer is from the data storage device to the separate data processing apparatus. Moreover, the data storage device can also be configured for data reception, wherein the direction of data transfer is from the separate data processing apparatus to the data storage device. Being configured for data extraction but not for data reception allows for a particularly easy and cost-efficient realization of the data storage device. However, with some acceptable costs, modern data storage devices can be realized which not only allow for data extraction but also for data reception.

The data storage device, preferably, is configured for a data extraction, which uses an electromagnetic field. Preferably, said data extraction does not require an optical reading of information, which is present on the data storage device. This offers the advantage that the data extraction can also take place when the data storage device is optically covered or blocked.

Advantageously, the maximum range for the data extraction using the electromagnetic field is limited to a value taken from the range of preferably to 10 cm to 20 cm, preferably 5 cm to 30 cm, preferably to 5 cm to 20 cm, preferably to 3 cm to 20 cm, preferably to 1 cm to 20 cm. This means that the separate data processing apparatus, which is configured from reading the color information data from the color sample device, may be remote from the sample color device or the data storage device, respectively, not more than the maximum range in order to allow the reading process. Providing such a near-distance limitation prevents the unintended reading of the color information data by such data processing apparatus, which are out of the maximum range and possibly not authorized for reading said data.

Moreover, the near-distance limitation allows providing more than one color sample device or data storage device, which, respectively, can be distinguished in dependence on the distance from the separate data processing apparatus. A first color sample device or data storage device may be located within the maximum data extraction range of the data processing apparatus, and a second color sample device or data storage device may be located outside of the maximum data extraction range, then the data processing apparatus is able to read the color information data of the first color sample device or data storage device, but not of the second one.

The minimum range for the data extraction using the electromagnetic field is, preferably not limited, which means that, preferably, the data extraction can take place when the separate data processing apparatus, which is configured from reading the color information data from the color sample device, is in direct contact with the sample color device or the data storage device, respectively. The minimum range may also be limited, in particular to a value taken from the range of 0 cm to 5 cm or 0 cm to 10 cm.

Preferably, the data storage device is writable such that the color information data can be written to the data storage device prior to connecting the data storage device to the color sample device or after connecting the data storage device to the color sample device.

Preferably, the data storage device contains, or consists of, an RFID (radio-frequency identification) transponder, which preferably is a passive RFID transponder. A passive transponder does not require a power source, e.g. a battery, while an active transponder includes a power source. The RFID transponder preferably is capable at least for data extraction, only for data extraction, or both, data extraction and data reception.

The RFID tag may also be printed, in particular printed to the color sample device, in particular to the substrate element or the color sample, for example following the instructions given in WO2009080607A2 or US8106430 B2.

The RFID transponder may be implemented using a standard for RFID, including standards of the International Organization for Standardization (ISO), the International Electrotechnical Commission (IEC), ASTM International, the DASH7 Alliance and EPCglobal.

The data storage device preferably is configured for a data extraction using an electromagnetic field, wherein the electromagnetic field works in the band 120-150 kHz (LF).

Preferably, the data storage device is configured to use Near Field Communication (NFC). Near Field Communication is a standards-based short-range wireless connectivity technology. According to the NFC-forum, which publishes under the internet address www.nfc-forum.org, NFC complements other known consumer level wireless technologies, by utilizing the key elements in existing standards for contactless card technology, including ISO/IEC 14443 A&B and JIS-X 6319-4. NFC also enables the data storage device and any suitable separate data processing device to share information at a distance that is, preferably, less than 4 centimeters with a maximum communication speed of, in particular, 424 kbps, in particular at a frequency of 13.56 Mhz. NFC has a bidirectional communication ability, therefore the data storage device being configured for NFC is capable for data extraction and date reception. NFC uses RFID technology. NFC may use passive HF-RFID-Tags employing ISO 14443 or ISO 15693. The color information data may be extracted from the data storage device from any NFC reader enabled separate apparatus, e.g. an NFC reader enabled computer, mobile phone, smart watch.

The data storage device may also be a programmable device, which can be provided with an executable program code. The executable program code may be executed actively by the data storing device, when the same includes a power source, or may be executed by using an external electromagnetic field, which may act as a source of energy.

Preferably, the color sample device is configured to automatically send the color information data to a separate data processing apparatus, which is capable for reading the color information data from the data storage device, or to automatically allow access to the data processing apparatus for allowing automatic reading. This allows for a comfortable and efficient use of the color sample device. It is also possible and preferred that the process of reading the color information data includes a security protection, e.g. a password-based verification, before the color information data can be read by the separate data processing apparatus. The security process is preferably implemented by the separate data processing apparatus, but may also, or alternatively, be implemented by the data storage device of the sample color device. Such a security feature allows for protecting the color information data from unauthorized access.

It is possible and preferred that the color sample device comprises more than one, in particular two or multiple substrate elements, wherein each substrate element carries a color sample and/or a data storage device, which contains color information data of the respective color sample. Such a color sample device, preferably, comprises a connection device for connecting the multiple substrate elements with each other. The connection device may contain a binder, e.g. a spiral binding or a hinge, which allows rotation of the substrate elements with respect to each other.

It is possible and preferred that the substrate element carries more than one data storage device and more than one corresponding color sample. Such a substrate element may be plain, possibly flexible, substrate, e.g. a plastic sheet or cardboard.

In particular, when the color sample device is a color swatch device, and the color sample includes a dyed textile, the color information data can include information on one or more of the following information components, including individual quality control data (dE and other colorimetric data), usage rights, expiration date of swatch, technical support contacts, order information such as customer name/purchase date, corresponding CMYK/RGB color values, predicted Dye Formulas on alternate substrates, Recommended Dyeing Procedure, Recommended Chemical Auxiliaries.

The color information data may also contain a referrer, in particular a link information, which can include an instruction for the data processing apparatus how to automatically acquire the more detailed color information data of the color sample, e.g. by providing an address, in particular network address, which is specific for the color sample, e.g. an URL (Uniform Resource Locator, see publication RFC 1738). However, it is preferred that the color information data contains all relevant color information, in particular contains more information than the link information, such that a link information must not be evaluated for receiving the desired color information. The referrer may be configured to cause the reading apparatus, in particular the data processing apparatus of the invention, to launch a local software application, which may be stored in a data storage device of the data processing apparatus. The local software application may be configured to deliver or present the color information to the user, for example depending on the authorization of the user, which may be evaluated by the data processing apparatus using a information data base stored in the data processing apparatus or accessed by the data processing apparatus via a local or global network, e.g. the internet.

An engineered color standard (ECS), at present also referred to as a color standard, is a custom color, which is unambiguously defined, in particular for a predetermined substrate under standardized illumination, by a characteristic set of parameters. Moreover, also a color according to an existing color library or according to a standard color system is unambiguously defined, in particular for a predetermined substrate under standardized illumination, by a characteristic set of parameters.

The data storage device can also be configured to be an optically readable device, e.g. a surface providing an optically readable code pattern, e.g. a barcode, QR-code or a DataMatrix. The color information data may be directly contained in the optically readable device, e.g. in the code pattern, or indirectly -but preferably automatically obtainable-using a predetermined link information contained in the optically readable device. For example, the link information may contain an instruction for the data processing apparatus how to automatically acquire the color information data of the color sample, e.g. by providing an address, in particular network address, which is specific for the color sample, e.g. an URL (Uniform Resource Locator, see publication RFC 1738).

The invention is also related to a data processing apparatus, configured to read the color information data from the data storage device of the color sample device according to the invention. For example, the data processing apparatus may contain a microprocessor or computer and a data communication device, which is configured to read the color information data from the data storage device of the color sample device according to the invention. The microprocessor or computer may also contain a program code, which is configured to let the data processing apparatus read the color information data from the data storage device of the color sample device according to the invention, when the program code is executed on the microprocessor or computer.

In a preferred embodiment the data processing apparatus has a display device and is configured to automatically display the color information data when the color information data is read from a sample color device according to the invention. Preferably, the data processing apparatus is configured to automatically display the color information data when the sample color device according to the invention is arranged within the maximum range for data extraction of the data processing apparatus. This can be achieved using a suitable program code, which is executed on the data processing apparatus and thereby automatically displays the color information data when the sample color device according to the invention is arranged within the maximum range for data extraction of the data processing apparatus.

The invention is also related to the program code, or to the data storage medium containing the program code, which is configured to let the data processing apparatus read the color information data from the data storage device of the color sample device according to the invention, when the program code is executed on the data processing apparatus.

The invention is also related to a system for providing color information on at least one color sample, including at least one color sample device according to the invention and at least one data processing apparatus according to the invention.

The invention is also related to a method for the production of the color sample device according to the invention, wherein the method comprises the following steps: - providing a substrate element, a color sample and a data storage device, containing the color information data of the color sample; assembling the substrate element, a color sample and a data storage device, in particular establishing a connection between the substrate element and the data storage device, preferably by adhesion, and or lamination, and/or a positive-fit and/or a force fit connection. The color information data may be transferred and stored in the data storage device, before, during or after the assembly of said components of the color sample device. In an embodiment, the color information data of the color sample is transferred to the data storage device by first, taking the color information data from any server based database, and possibly then recording the color information data on a barcode, in particular data matrix code, located on a pick list, and possibly then reading the color information data from the barcode using a barcode reader, and possibly then transferring and/or storing the color information data on the data storage device, e.g. the NFC.

Another aspect according to the invention is the use of the color sample device as a validation key for software used by brands or retailers to manage digital color submission and/or approval in the supply chain.

Another aspect according to the invention is the use of the color sample device as a validation key for color formulation software. Color Formulation Software is typically used to generate a color formula or recipe for products in the textile, paints, plastics or coatings industry.

Another aspect according to the invention is the use of the color sample device as a validation key for color quality control software. Typically, color quality control software enables accurate measurement of colorimetric values and color differences.

Another aspect according to the invention is the use of the color sample device as input source for colorimetric data used in CAD or other design software.

Further embodiments, features and applications of the present invention can be taken from the subsequent description of embodiments and from the figures.

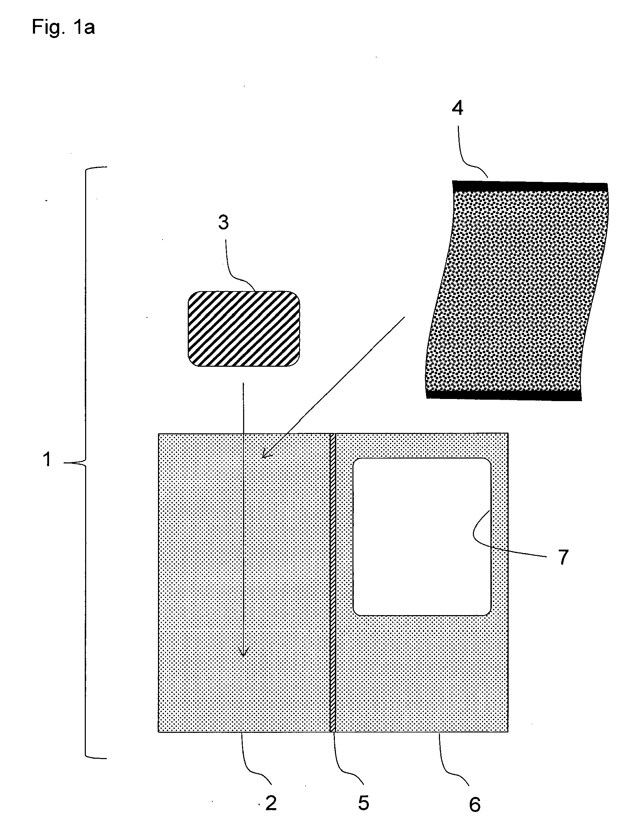

Fig. 1a shows the exploded view of schematically drawn components of a color sample device according to an embodiment of the present invention.
Fig. 1 b shows the assembled color sample device according to the embodiment of the present invention shown in Fig. 1a.
Fig. 1c shows the assembled color sample device according to the embodiment of the present invention shown in Fig. 1 b, wherein the substrate element is covered.
Fig. 2a shows a color sample device according to another embodiment of the present invention.
Fig. 2b shows a color sample device according to another embodiment of the present invention.
Fig. 3 shows a system according to the invention including a first color sample device according to the invention and second color sample device according to the invention and a data processing apparatus according to the invention.
Fig. 4 shows an exemplary method according to an embodiment of the present invention for producing the color sample device according to an embodiment of the present invention.

Fig. 1a shows the disassembled state of a color sample device 1. The color sample device 1 is a color swatch device in terms of the present invention, because the color sample 4 is a swatch, i.e. a textile sample, which is dyed by a color. The swatch was cutout from a larger piece of textile, here in a rectangular shape. The swatch is deformable, as it is typical in the case of textile samples. The data storage device 3 is a passive RFID transponder, and more specifically is an NFC-tag in the present embodiment. Such a transponder typically comprises an semiconductor based microchip (not shown) and an antenna (not shown), which is connected to the microchip. The data storage device 3 contains color information data related to the color sample 4.

The color information data contains the following information:
- Individual ECS quality control data (dE and other colorimetric data)
- ECS Expiration Date
   - Mill Purchase Validation for ensuring that the company using the color information data legally purchased the usage rights
- Predicted Dye Formulas on alternate substrates
- Recommended Dyeing Procedures
- Recommended Chemical Auxiliaries
- expiration date of swatch
- technical support contacts
- order information such as customer name/purchase date
- corresponding CMYK/RGB color values

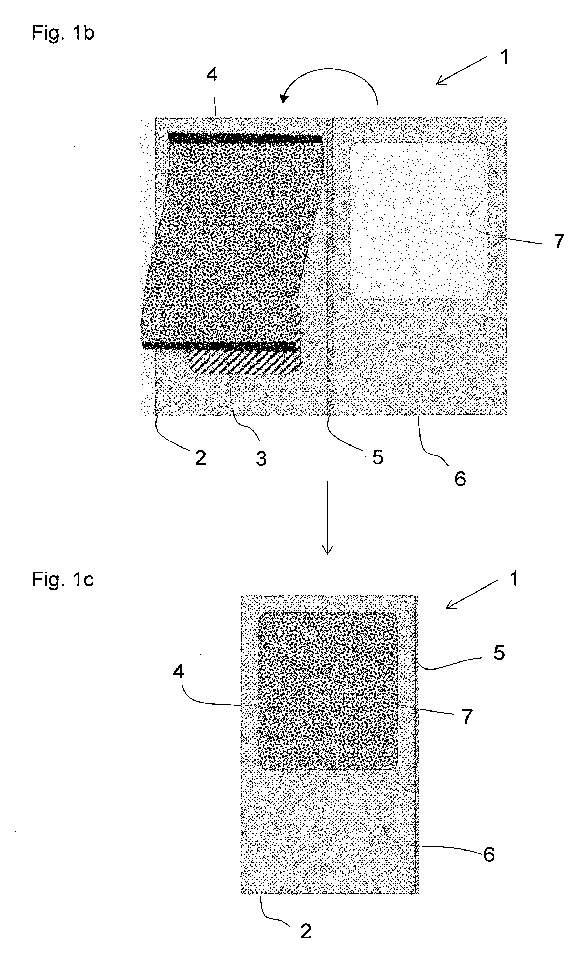

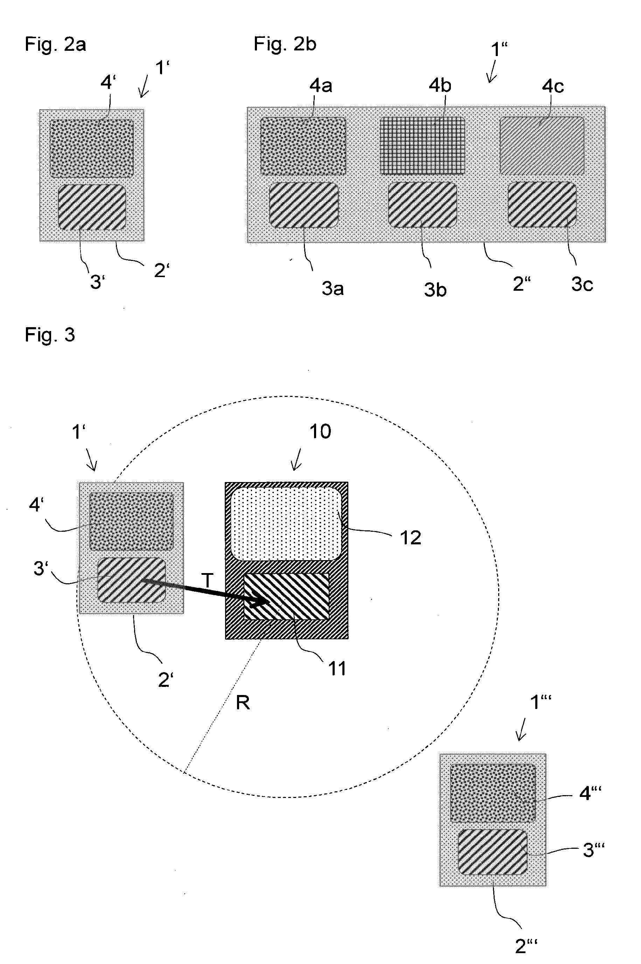

The data storage device 3 is machine-readable and is configured for a wireless reading of the color information data from the data storage device by a data processing apparatus according to the invention, in particular the data processing apparatus 10 shown in Fig. 3. A substrate element 2 is provided, which, at present, is a flexible cardboard having rectangular shape. A cover element 6, here a flexible cardboard having the same rectangular shape and size as the substrate element 2, is connected to the substrate element 2 via a hinge 5, here a film-hinge. The cover element 6 can be rotated around the axis of the hinge 5 for covering the surface of the substrate element 2, as indicated by the curved arrow in Fig. 1 b. The cover 6 has an opening 7, which allows for visually inspecting the display surface, which is the exposed and visible surface of the color sample, even if the cover element 6 covers the substrate element. A transparent foil or plate (not shown), which is transparent in the visible spectrum of light, may be provided to cover the opening 7. The transparent foil or plate may be partly or substantially completely nontransparent for UV-light, thereby preventing the dyes of the dyed color sample from photobleaching, when the cover is closed. The transponder 3 and the color sample 4 are to be connected to the surface of the substrate element.

As shown in Fig. 1b, the transponder is connected to the substrate element 2 using an adhesive, and/or using a lamination foil (not shown). The swatch 4 is connected by adhesive to the substrate at least -or preferably not more than- along an edge of the swatch 4 or at only one, two, or a few spots of adhesion. At present, the swatch 4 is connected to the substrate such that the swatch covers the data storage device 3. Since the transponder does not require a visual connection between the reading apparatus, i.e. the data processing device 10, and the transponder 3, the transponder 3 can be hided within the substrate element or under the color sample, which is the case here.

In the covered state of the color sample device 1, shown in Fig. 1c, the sample color device is compact, the display surface of the swatch is largely visible and the color information data are accessible, even though the data storage device 3 is covered.

However, the data storage device 3 may also be visually exposed. This is the case for the embodiment of the color sample device 1', shown in Fig. 2a. The color sample 4' and the data storage device 3' are both connected to a single surface of the substrate element 2', at present.

In the Fig. 2b, another embodiment of a color sample device 1" is shown, wherein multiple -here three- pairs of a color sample and a data storage device are connected to a single substrate 2". A data storage device 3a is arranged vicinal to a color sample 4a on the substrate element 2", wherein the data storage device 3a contains first color information data specific for the color sample 4a. A data storage device 3b is arranged vicinal to a color sample 4b on the substrate element 2", wherein the data storage device 3b contains first color information data specific for the color sample 4b. A data storage device 3c is arranged vicinal to a color sample 4c on the substrate element 2", wherein the data storage device 3c contains first color information data specific for the color sample 4c. Vicinal data storage devices 3a, 3b and 3c are placed in a distance which is large enough to ensure that the data processing device 10 can be placed in front of one of the data storage devices and read the color information data only from said data storage device without reading the color information data from the residual data storage devices. For example, the distance of vicinal data storage devices could be equal or larger than the maximum range for data extraction, which can be limited to a few centimeters in the case of NFC.

Fig. 3 shows a system 100 according to the invention including a first color sample device 1' and a similar second color sample device 1"' and a data processing apparatus 10 according to an embodiment of the invention. The data processing apparatus 10 has a microprocessor (not shown) and a data communication device 11, which is configured to read the color information data from the data storage device of the color sample device according to the invention. The data communication device 11 is an NFC reader, at present, which allows a low maximum range R of a few centimeters for the data extraction. For example R can be smaller or equal to 5 cm, 4 cm, or 3 cm. The maximum range R is shown here as a circle around the center of the NFC reader 11. The first color sample device 1' is arranged within the maximum range R such that the data processing apparatus 10 will automatically extract the color information data stored in the NFC transponder 3' and immediately display said color information data on the display 12 of the data processing apparatus 10. Said process of automatically reading a data storage device, which in particular is located within the maximum range of data extraction of the data communication device, is implemented by using an appropriate program code, in particular software, which is executed by the microprocessor of the data processing apparatus 10. The second color sample device 1"', which is located outside the maximum range R, cannot be read by the data processing apparatus 10.

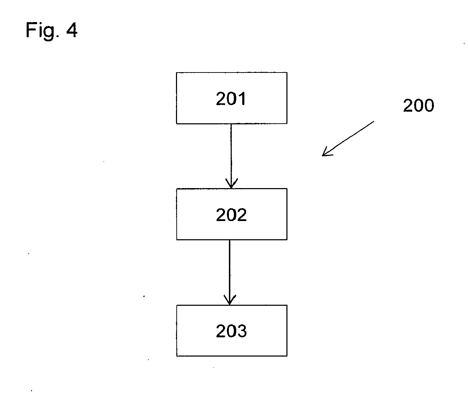

Fig 4 shows the method 200 according to an embodiment of the invention for the production of the color sample device according to the invention, wherein the method comprises the following steps: - providing a substrate element, a color sample and a data storage device, containing the color information data of the color sample (step 201); assembling the substrate element, a color sample and a data storage device (202), in particular establishing a connection between the substrate element and the data storage device (203), preferably by adhesion, and or lamination, and/or a positive-fit and/or a force fit connection.

## Claims

**1.** Color sample device (1; 1'; 1 "; 1"') for showing color information of a color sample, having
a substrate element (2; 2'; 2"; 2"') for carrying the color sample,
the color sample (4; 4'; 4"; 4a, 4b, 4c) having at least one display surface, which displays the color of the color sample, and which is connected and arranged at the substrate element,
a data storage device (3; 3'; 3"; 3a, 3b, 3c), which contains color information data, which is machine-readable and which is configured for a wireless reading of the color information data from the data storage device by the data processing apparatus (10) of claim 7.

**2.** Color sample device according to claim 1, which is a passive device, i.e., the color sample device does not have a power source, in particular a battery.

**3.** Color sample device according to claim 1 or 2, wherein the data storage device is configured for a wireless data extraction, which uses an electromagnetic field, wherein the maximum range for the data extraction using the electromagnetic field is limited to a value taken from the range of 5 cm to 30 cm.

**3.** Color sample device according to one of the previous claims, wherein the data storage device includes an RFID transponder or is an RFID transponder, or includes a barcode.

**4.** Color sample device according to claim 3, wherein the RFID transponder is a passive RFID transponder.

**5.** Color sample device according to claim 3, wherein the data storage device contains a NFC transponder or is a NFC transponder.

**6.** Color sample device according to one of the previous claims, wherein the color sample device comprises more than one, in particular two or multiple substrate elements, wherein each substrate element carries at least one color sample and/or at least one data storage device, which contains color information data of the respective color sample..

**7.** Data processing apparatus, including a data communication device and configured to read the color information data from the data storage device of the color sample device of claim 1.

**8.** Data processing apparatus according to claim 7, wherein the data communication device is a NFC reader.

**9.** Data processing apparatus according to claim 7 or 8, which contains a microprocessor or computer and a display, wherein the microprocessor or computer is configured to automatically display the color information data contained in the data storage device of a color sample device of claim 1, when the color sample device of claim 1 is placed within the maximum range of data extraction of the data communication device.

**10.** System for reading the color information data contained in the data storage device of a color sample device, including at least one color sample device of claim 1 and at least one data processing apparatus of claim 7.

**11.** Data storage medium containing a program code, which is configured to let the data processing apparatus of claim 7 read the color information data from the data storage device of the color sample device of claim 1, when the program code is executed on the data processing apparatus.

**12.** Method for the production of the color sample device according to the invention, wherein the method comprises the following steps:
- providing a substrate element, a color sample and a data storage device, containing the color information data of the color sample;
- assembling the substrate element, a color sample and a data storage device.

**13.** Use of the color sample device of any of claims 1 to 6 and/or the data processing apparatus of any of claims 7 to 9, or the system of claim 10, for providing color information data, in particular on a custom color.

**14.** Use of the color sample device of any of claims 1 to 6 and/or the data processing apparatus of any of claims 7 to 9, or the system of claim 10, for providing a color standard for a swatch.

**15.** Use of the color sample device as a validation key for software used by brands or retailers to manage digital color submission and/or approval in supply chain.
